# EUROPÄISCHE PATENTANMELDUNG

(11) **EP 0 796 755 A1**
(43) Veröffentlichungstag der Anmeldung: **24.09.1997**
(21) Anmeldenummer: 97104038.1
(22) Anmeldetag: 11.03.1997
(51) Int. Cl.: B60K 15/05, B60K 15/04

(54) **Zum Abdecken des Tankstutzens dienende Tankklappe für Kraftfahrzeuge**

(30) Priorität: 21.03.1996 DE 29605289 U
(71) Anmelder: Mittelhäuser, Bernhard, D-30900 Wedemark (DE)
(72) Erfinder: Cole, John, 30161 Hannover (DE); Dörries, Otto, 30853 Langenhagen (DE)
(74) Vertreter: Depmeyer, Lothar

(57) **Zusammenfassung**

Die Erfindung betrifft eine zum Abdecken des Tankstutzens dienende Tankklappe für Kraftfahrzeuge, wobei die Tankklappe einen im wesentlichen plattenförmigen Klappenkörper (2) und einen bogenförmigen, an der Innenseite des Klappenkörpers (2) angreifenden, am freien Ende mit Lagerelementen ( Zapfen ) versehenen Schwenkarm (3) aufweist. Zur Vereinfachung der Herstellung, insb. auch zur Vereinfachung der Lackierarbeiten sind aufgrund der Erfindung der Klappenkörper (2) einerseits und der Schwenkarm (3) andererseits für sich hergestellte Teile, von denen der eine oder beide Verbindungselemente aufweisen, die zur formschlüssigen und/oder kraftschlüssigen und/oder stoffschlüssigen Verbindung dieser beiden Teile dienen. Zweckmässigerweise wird dabei nur der Plattenkörper (2) als lackiertes Bauteil ausgeführt, während der Schwenkarm (3) nach seiner Abformung unbearbeitet bleibt.

## Beschreibung

Die Erfindung betrifft eine zum Abdecken des Tankstutzens an Fahrzeugen dienende Tankklappe, wobei der eigentliche Klappenkörper im wesentlichen plattenförmig gestaltet ist, der an seiner Innenseite mit einem bogenförmigen, insb. mit einem in etwa im wesentlichen J-förmigen Schwenkarm versehen ist.

Derartige Klappen werden nach bekannten Vorschlagen als Formkörper aus einem zähharten Kunststoff ausgeführt und farblich der Aussenhaut des Fahrzeuges angepasst. Abgesehen davon, dass für die Herstellung dieser Formkörper vergleichsweise komplizierte und in der Anschaffung teure Werkzeuge erforderlich sind, können die eigentlichen Klappenkörper nur schwerlich für sich lackiert werden. Vielmehr ist man im Regelfall gezwungen, den Klappenkörper zusammen mit dem Schwenkarm zu bearbeiten. Dies führt auch zu unnötigen Lackierarbeiten und Materialverlusten.

Aufgrund der Erfindung sollen diese Nachteile vermieden werden; demgemäss wird im wesentlichen angestrebt, die Herstellungswerkzeuge und die Lackierarbeiten zu vereinfachen und zu verbilligen.

Zur Lösung dieser Aufgabe sind erfindungsgemäss der Schwenkarm einerseits und der Klappenkörper andererseits für sich hergestellte Teile, von denen der eine oder beide Verbindungselemente aufweisen, die zur formschlüssigen und/oder kraftschlüssigen und/oder stoffschlüssigen Verbindung dieser beiden Teile dienen. Zweckmässigerweise wird dabei nur der Klappenkörper als lackiertes Bauteil ausgeführt, während der Schwenkhebel nach seiner Abformung unbearbeitet bleibt.

Eine so ausgeführte Tankklappe hat den Vorteil, dass die Abformung vergleichsweise günstiger wird und zudem für jedes Teil eine gesonderte Werkstoffwahl getroffen werden kann. Von grosser Bedeutung ist ferner, dass nunmehr unterschiedlich bemessene bzw. für unterschiedliche Fahrzeugtypen geeignete Tankklappen ohne weiteres erzeugt werden können. Ebenso ist es nunmehr viel einfacher, unterschiedlichen Farbgebungen und/oder geschmacklichen Gestaltungen Rechnung zu tragen.

Besonders vorteilhaft ist es, zwischen den beiden Teilen eine Konusverbindung mit Rastmitteln nach Art von Clipsen vorzusehen. Dennoch ist es aber auch möglich, Verklebungen, Verstiftungen oder Verschweissungen vorzunehmen, die deshalb besonders günstig sind, weil die erwähnten Teile aus einem geeigneten Kunststoff gefertigt werden.

Weitere Einzelheiten der Erfindung werden anhand der Zeichnung erläutert, in der ein Ausführungsbeispiel der Erfindung dargestellt ist.

Es zeigen :

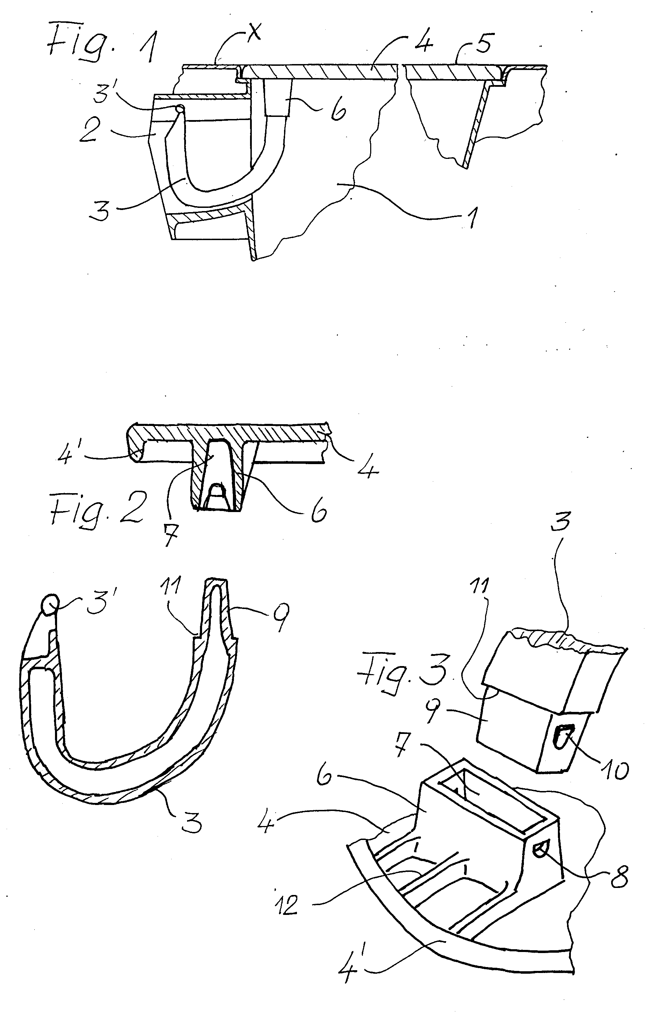

Fig. 1 einen Teilschnitt durch ein Kraftfahrzeug im Bereich seines Brennstoffeinfüllstutzens,
Fig. 2 einen Teilschnitt durch die Bestandteile einer Tankklappe und
Fig. 3 eine Einzelheit aus Fig. 2 in schaubildlicher Darstellung.

In einem im wesentlichen trichterförmigen Gehäuse 1 befindet sich der nicht dargestellte Tankstutzen mit Kappe. Das Gehäuse 1 hat an einer Seite eine Ausnehmung 2, in die ein bogenförmiger Schwenkarm 3 eines etwa plattenförmigen Klappenkörpers 4 hineinragt.

Der Klappenkörper 4 verschliesst das Gehäuse 1 im eingeklappten Zustand; seine lackierte Aussenfläche 5 ist praktisch bündig mit der Ausssenhaut x des Fahrzeuges. Es versteht sich, dass die Farbgebungen des Klappenkörpers 4 und der Aussenhaut x übereinstimmen. Um den Klappenkörper 4 verschwenken zu können, ist der Schwenkarm 3 beidseitig am freien Ende mit abstehenden Zapfen 3' versehen, die in entsprechende Sacklöcher der Ausnehmung 2 des Gehäuses 1 hineinragen. Damit ist der Klappenkörper 4 so weit nach aussen schwenkbar, dass der Tankstutzen zugänglich wird.

Der Klappenkörper 4 einerseits und der Schwenkarm 3 andererseits werden für sich als Formkörper aus einem zähharten Kunststoff gefertigt. Der Schwenkarm 3 erfährt keine Nachbearbeitung; der Klappenkörper 4 hingegen wird durch Lackieren od. dgl. nachbearbeitet.

Um eine gebrauchsfertige Tankklappe zu erhalten, ist der Klappenkörper 2 im Bereich eines Randes mit einem Vorsprung 6 mit einer konischen Ausnehmung 7 in Form eines Sackloches versehen. An gegenüberliegenden Stellen der Wandung des Vorsprunges 6 befinden sich im wesentlichen halbkreisförmige Durchbrechungen 8.

Das freie Ende des Schwenkarmes 3 ist mit einem ebenfalls konischen Kopfstück 9 versehen, das der Ausnehmung 7 entsprechend gestaltet ist. An gegenüberliegenden Stellen ist das Kopfstück 9 mit kleinen Vorsprüngen 10 ausgestattet.

Mit dem Einführen des Kopfstückes 9 in die Ausnehmung 7 dringen die Vorsprünge 10 unter geringer elastischer Verformung der Wandungen des Vorsprunges 6 in die Durchbrechungen 8 ein. Es kommt so eine Verrastung zustande, die eine ausreichend feste Verbindung zwischen dem Schwenkarm 3 und dem Klappenkörper 2 entstehen lässt.

Anstelle dieser Verrastung können auch Stiftbefestigungen benutzt werden. Zudem ist es zweckmassig, wenn am Kopfstück 9 ein Absatz 11 vorgesehen ist, der sich auf die Stirnfläche des Vorsprunges 6 aufsetzen kann.

Die Erfindung eröffnet auch die Möglichkeit, den Schwenkarm 3 und den Klappenkörper 2 festigkeitsmässig besonders günstig zu gestalten. So kann der Klappenkörper 2 zur Erhöhung seiner Steifigkeit mit einem umlaufenden, nach innen vorspringenden Rand 4' versehen werden, Ferner ist auch an seiner Innenfläche eine Verrippung 12 möglich.

## Patentansprüche

1. Zum Abdecken des Tankstutzens an Fahrzeugen dienende, als Kunststofformkörper ausgeführte Tankklappe mit einem im wesentlichen plattenförmigen Klappenkörper und einem bogenförmigen, an der Innenseite des Klappenkörpers angreifenden, am freien Ende mit Lagerelementen ( Zapfen ) versehenen Schwenkarm, dadurch gekennzeichnet, dass der Klappenkörper (2) einerseits und der Schwenkarm (3) andererseits für sich hergestellte Teile sind, von denen der eine oder beide Verbindungselemente (6,9) aufweisen, die zur form- und/oder kraft- und/oder stoffschlüssigen Verbindung dieser beiden Teile dienen.

2. Tankklappe nach Anspruch 1, dadurch gekennzeichnet, dass der Klappenkörper (2) nach seiner Entformung bearbeitet z.B. lackiert, der Schwenkarm (3) hingegen nach seiner Entformung unbearbeitet ist.

3. Tankklappe nach Anspruch 1, dadurch gekennzeichnet, dass der Klappenkörper (2) einerseits und der Schwenkarm (3) andererseits aus unterschiedlichen Werkstoffen bestehen.

4. Tankklappe nach Anspruch 1, dadurch gekennzeichnet, dass der Klappenkörper (2) an seiner Innenseite einen ununterbrochen umlaufenden, nach unten gezogenen Rand (4') aufweist.

5. Tankklappe nach Anspruch 1, dadurch gekennzeichnet, dass der Klappenkörper (2) einen eine konische Ausnehmung (7) aufweisenden Vorsprung (6) und der Schwenkarm (3) ein entsprechend konisch gestaltetes Kopfstück (9) aufweist.

6. Tankklappe nach Anspruch 5, dadurch gekennzeichnet, dass die Verbindung gemäss Anspruch 5 durch Verrastung gesichert ist.

7. Tankklappe nach Anspruch 5, dadurch gekennzeichnet, dass die Verbindung gemäss Anspruch 5 durch einen Querstift gesichert ist.

8. Tankklappe nach Anspruch 5, dadurch gekennzeichnet, dass die Verbindung gemäss Anspruch 5 durch Verkleben gesichert ist.
